# EUROPÄISCHE PATENTSCHRIFT

(11) **EP 3 191 740 B1**
(45) Veröffentlichungstag und Bekanntmachung des Hinweises auf die Patenterteilung: **26.09.2018**
(21) Anmeldenummer: 15798016.0
(22) Anmeldetag: 18.11.2015
(51) Int. Cl.: F16H 57/04, B60K 17/04

(54) **RADNABENGETRIEBE**
WHEEL HUB GEAR
ENGRENAGE DE MOYEU DE ROUE

(30) Priorität: 25.11.2014 EP 14194744
(43) Veröffentlichungstag der Anmeldung: 19.07.2017
(73) Patentinhaber: Flender GmbH, 46395 Bocholt (DE)
(72) Erfinder: BECKA, Simon, 45128 Essen (DE); KESCHTGES, Frank, 46399 Bocholt (DE)
(74) Vertreter: Maier, Daniel Oliver
(86) Internationale Anmeldenummer: PCT/EP2015/076923
(87) Internationale Veröffentlichungsnummer: WO 2016/083201

(56) Entgegenhaltungen:
- EP-A1- 1 832 461
- EP-A1- 2 168 860
- JP-A- 2011 240 882
- US-A1- 2009 032 321

## Beschreibung

Die Erfindung betrifft ein Radnabengetriebe. Solche Getriebe sind bekannt und werden mitunter auch als Mining-Truck-Getriebe bezeichnet.

Aus der gattungsgemäßen EP 1 832 461 A1 ist ein Fahrzeugantrieb bekannt, der als Radnabenantrieb ausgebildet ist. Der Radnabenabtrieb umfasst ein Getriebe, das eine stirnseitige Bremstrommel aufweist. An der Bremstrommel sind Kühlrippen angeordnet, denen radseitig eine Gehäusewandung gegenüberliegt. Durch benachbarte Kühlrippen werden Kanäle definiert, die sich in eine Radialrichtung erstrecken.

EP 2 168 860 A1 offenbart ein elektrisches Motorrad, das über einen Radnabenantrieb verfügt, der in einer Hinterradschwinge angeordnet ist. Der Radnabenantrieb weist einen Motor auf, der über eine Steuereinheit angesteuert wird, die auch in der Hinterradschwinge aufgenommen ist. In der Hinterradschwinge ist ein Luftkanal ausgebildet, in dem eine Mehrzahl als Luftleitrippen angeordnet ist, die dazu ausgebildet sind, von einem Kühllüfter angesaugte Luft zu Lüftungslöchern zu führen. Zu dem Luftkanal in der Hinterradschwinge gehört auch eine Außenwandung, die den Luftleitrippen gegenüberliegt.

Radnabengetriebe werden im Betrieb sehr warm. Aufgrund des kompakten Aufbaus sind Elemente zur Kühlung an einem Radnabengetriebe nur schwer anzubringen. Im Ergebnis wird das Radnabengetriebe unter Last entweder zu warm oder das Radnabengetriebe wird nur in Teillast betrieben.

Derzeit werden Radnabengetriebe nur durch freie Konvektion sowie den Fahrtwind und sich aufgrund der Rotation bildender Luftwirbel gekühlt. Um die wärmeabführende Oberfläche zu vergrößern, ist bei einzelnen Radnabengetrieben eine stirnseitige Oberfläche verrippt.

Eine Aufgabe der vorliegenden Erfindung besteht darin, eine weitere Ausführungsform eines Radnabengetriebes anzugeben, insbesondere eine Ausführungsform eines Radnabengetriebes, die sich durch eine verbesserte Kühlwirkung auszeichnet.

Diese Aufgabe wird erfindungsgemäß mit einem Radnabengetriebe mit den Merkmalen des Anspruchs 1 gelöst. Dazu ist bei einem Radnabengetriebe mit einer als Stirnseite fungierenden Außenfläche, welche radial ausgerichtete und regelmäßig beabstandete Kühlrippen aufweist, ein die stirnseitigen Kühlrippen abdeckender Deckel mit einer zentralen Öffnung vorgesehen, wobei der Deckel zusammen mit jeweils zwei benachbarten Kühlrippen eine Mehrzahl von radial ausgerichteten Kühlkanälen definiert.

Das erfindungsgemäße Radnabengetriebe zeichnet sich durch eine über die Stirnseite hinaus verlängerte Antriebsachse aus, wobei an der verlängerten Antriebsachse ein die umgebenden Kühlkanäle anströmender Radiallüfter angebracht ist. Im Betrieb wird der Radiallüfter durch die Antriebsachse in Rotation versetzt. Der Radiallüfter dreht also mit der Drehgeschwindigkeit der Antriebsachse und damit mit einer deutlich höheren Drehgeschwindigkeit als das Radnabengehäuse und dessen Stirnfläche. Der sich drehende Radiallüfter beschleunigt die jeweils erfassten Luftpartikel und unter Zentrifugalkrafteinfluss gelangen diese in die sich in radialer Richtung an die einzelnen Lüfterflügel des Radiallüfters anschließenden Kühlkanäle. Dadurch ergibt sich ein Luftstrom durch die Kühlkanäle, und zwar ein im Vergleich zu einer Ausführungsform ohne Radiallüfter, wenn sich also der Luftstrom ausschließlich aufgrund der Rotation des Radnabengehäuses und der Stirnfläche ergibt, deutlich erhöhter Luftmassenstrom. Der erhöhte Luftmassenstrom führt zu einer nochmals deutlich verbesserten Entwärmung des Radnabengetriebes.

Der Vorteil des hier vorgeschlagenen Radnabengetriebes besteht darin, dass die aufgrund der Anbringung des Deckels resultierenden Kühlkanäle im Vergleich zu einer Stirnseite nur mit Kühlrippen zu einer besseren Entwärmung des Radnabengetriebes führen. Im Betrieb ergibt sich nämlich bei sich drehendem Radnabengetriebe und der dann wirkenden Zentrifugalkraft eine Luftströmung durch die Kühlkanäle nach außen. Dies begünstigt die Wärmeabfuhr.

Vorteilhafte Ausgestaltungen der Erfindung sind Gegenstand der Unteransprüche. Dabei verwendete Rückbeziehungen weisen auf die weitere Ausbildung des Gegenstandes des Hauptanspruches durch die Merkmale des jeweiligen Unteranspruches hin. Des Weiteren ist im Hinblick auf eine Auslegung der Ansprüche bei einer näheren Konkretisierung eines Merkmals in einem nachgeordneten Anspruch davon auszugehen, dass eine derartige Beschränkung in den jeweils vorangehenden Ansprüchen nicht vorhanden ist.

Die Stirnseite liegt vorzugsweise in einer Ebene, welche senkrecht zu einer Antriebsachse des Getriebes verläuft, insbesondere senkrecht zu einer Antriebsachse des Getriebes, welche im Einbauzustand des Getriebes in einem Fahrzeug quer zur Längsachse des Fahrzeugs verläuft. Die Stirnseite liegt dabei vorzugsweise an einer nach Außen weisenden, d.h. vom Fahrzeug abgewandten Seite des Getriebes.

Der die stirnseitigen Kühlrippen abdeckende Deckel liegt vorzugsweise in einer Ebene, welche parallel zu der Ebene verläuft, in welcher die Stirnseite liegt. Vorzugsweise liegt der Deckel dabei an den Kühlrippen an, ist weiter vorzugsweise mit den Kühlrippen fest verbunden.

Die Kühlkanäle verlaufen vorzugsweise sternförmig, wobei sie auf einen gemeinsamen Mittelpunkt hin orientiert sind. Vorzugsweise fällt der gemeinsame Mittelpunkt mit der zentralen öffnung des Deckels zusammen.

Durch die zentrale Öffnung des Deckels kann von Außen Kühlluft einströmen, welche nachfolgend durch die radial ausgerichteten Kühlkanäle strömt.

In einer bevorzugten Ausführungsform der Erfindung liegt die Stirnseite in einer Ebene, welche senkrecht zu der den Radiallüfter tragenden, verlängerten Antriebsachse verläuft.

Bei einer besonderen Ausführungsform des Radnabengetriebes mit einem Radiallüfter kommt ein drehrichtungsunabhängiger Radiallüfter, also ein Radiallüfter mit in axialer Richtung nicht angestellten Lüfterflügeln, zum Einsatz. Die Drehrichtungsunabhängigkeit des Radiallüfters bewirkt, dass der zur Entwärmung wirksame Luftmassenstrom unabhängig von der Drehrichtung der Antriebsachse und damit unabhängig von einer Fahrtrichtung eines jeweiligen Fahrzeugs mit einem solchen Radnabengetriebe entsteht.

Bei einer weiteren Ausführungsform des Radnabengetriebes weisen die Kühlrippen in radialer Richtung unterschiedliche Längen auf, so dass sich zumindest lange Kühlrippen und in Relation zu den langen Kühlrippen kurze Kühlrippen ergeben. Die langen und kurzen Kühlrippen sind in jeweils radialer Ausrichtung gleichmäßig entlang des Umfangs der Stirnfläche verteilt. Die Abfolge langer und kurzer Kühlrippen ist dabei derart, dass in regelmäßiger Abfolge in Umfangsrichtung auf eine lange Kühlrippe eine Anzahl kurzer Kühlrippen, also zum Beispiel eine kurze Kühlrippe, zwei kurze Kühlrippen, drei kurze Kühlrippen und so weiter, und dann erneut eine lange Kühlrippe folgt. Durch eine hohe Anzahl von Kühlrippen wird die zur Entwärmung wirksame Fläche erhöht. Bei ausschließlich langen Kühlrippen würden sich allerdings relativ schmale angeströmte Öffnungen der durch jeweils zwei Kühlrippen und den Deckel definierten Kühlkanäle ergeben. Der Vorteil der oben skizzierten Anordnung und der alternierenden Abfolge besteht demnach darin, dass die zur Entwärmung wirksame Fläche, nämlich die Summe der Seitenflächen der langen und kurzen Kühlrippen, erhöht wird, ohne dass die angeströmten Öffnungen zu klein werden. Zwischen zwei langen Kühlrippen ergibt sich jeweils eine zu zumindest zwei Kühlkanälen führende und damit entsprechend breite Öffnung.

Bei einer besonderen Ausführungsform eines Radnabengetriebes mit einer solchen alternierenden Abfolge von langen und kurzen Kühlrippen ist vorgesehen, dass in regelmäßiger Abfolge in Umfangsrichtung auf eine lange Kühlrippe eine kurze Kühlrippe und dann erneut eine lange Kühlrippe folgt. Dies lässt für jeweils zwei benachbarte und durch eine kurze Kühlrippe voneinander getrennte Kühlkanäle eine ausreichend große angeströmte Öffnung. Auf der anderen Seite ergibt sich durch die hohe Anzahl langer Kühlrippen auch eine sehr große zur Wärmeabfuhr wirksame Oberfläche.

Bei einer nochmals weiteren Ausführungsform eines Radnabengetriebes wie hier und im Folgenden beschrieben weist der Deckel eine von der zentralen Öffnung ausgehend konisch gestufte Struktur auf. Die Höhe des Deckels nimmt mit der konischen Abstufung von innen nach außen ab, so dass sich die geringste Höhe im Bereich der Kühlrippen ergibt. Die Höhe des Deckels im Mittelteil erlaubt die Anbringung eines Radiallüfters mit in axialer Richtung ausreichend hohen Lüfterflügeln. Die Höhe der Lüfterflügel beeinflusst maßgeblich die bewegte und in die Kühlkanäle gepresste Luftmenge und damit auch die erreichbare Entwärmung. Die geringere Höhe im Randbereich, also über den Kühlrippen, führt zu einer kompakten Bauform, wobei aufgrund der geringeren Höhe eine Erhöhung der Strömungsgeschwindigkeit durch die Kühlkanäle resultiert. Die erhöhte Strömungsgeschwindigkeit führt zu einer quantitativ etwa gleichen Entwärmung wie sie sich bei einem flachen Deckel und entsprechend höheren Kühlrippen, also einer vergrößerten Fläche der Kühlkanäle, ergeben würde. Die mit dem konisch gestuften Deckel resultierende kompakte Bauform hat also keinen negativen Einfluss auf die erreichbare Entwärmung.

Radnabengetriebe der hier und im Folgenden beschriebenen Art kommen zur Verwendung bei Kraftfahrzeugen in Betracht. Entsprechend ist die Erfindung auch ein Kraftfahrzeug, zum Beispiel ein Lastkraftwagen, insbesondere ein Lastkraftwagen in Form eines sogenannten mining trucks, mit zumindest einem solchen Radnabengetriebe, üblicherweise jeweils einem Radnabengetriebe für jedes Rad.

Nachfolgend wird ein Ausführungsbeispiel der Erfindung anhand der Zeichnung näher erläutert. Einander entsprechende Gegenstände oder Elemente sind in allen Figuren mit den gleichen Bezugszeichen versehen.

Es zeigen
- FIG 1: ein bekanntes Radnabengetriebe mit einer verrippten Stirnfläche,
- FIG 2: ein Radnabengetriebe der hier vorgeschlagenen Art und
- FIG 3: einen Schnitt durch das Radnabengetriebe aus FIG 2.

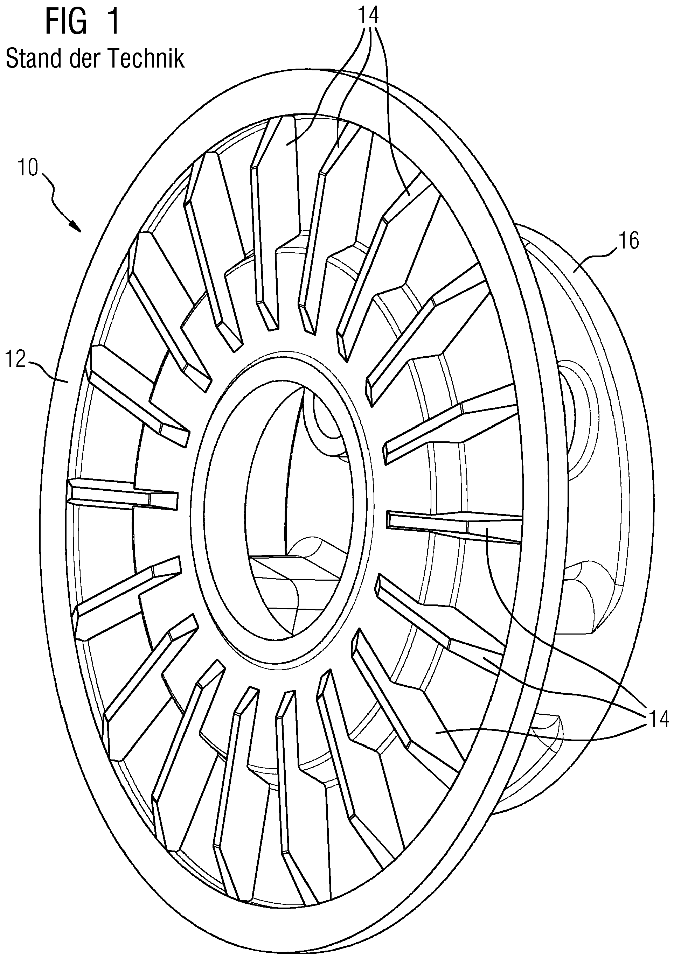

Die Darstellung in FIG 1 zeigt eine isometrische Ansicht eines Teils eines Gehäuses eines Radnabengetriebes 10. Bei der für die Darstellung gewählten Blickrichtung ist im Wesentlichen eine Stirnseite 12 des Gehäuses des Radnabengetriebes 10 gezeigt. Auf der Stirnseite 12 befinden sich - als bisherige Maßnahme zur besseren Kühlung des Radnabengetriebes 10 - radial ausgerichtete und regelmäßig beabstandete und als Kühlrippen 14 fungierende Rippen. Diese vergrößern die wärmeabführende Oberfläche des Radnabengetriebes 10 und bewirken entsprechend eine im Vergleich zu einer Kühlung mit einer ebenen Stirnseite 12 bessere Kühlung. Im Hintergrund ist noch ein Bauteil 16 an der Getriebestirnseite erkennbar. Das Innere des Radnabengetriebes 10 ist nicht gezeigt.

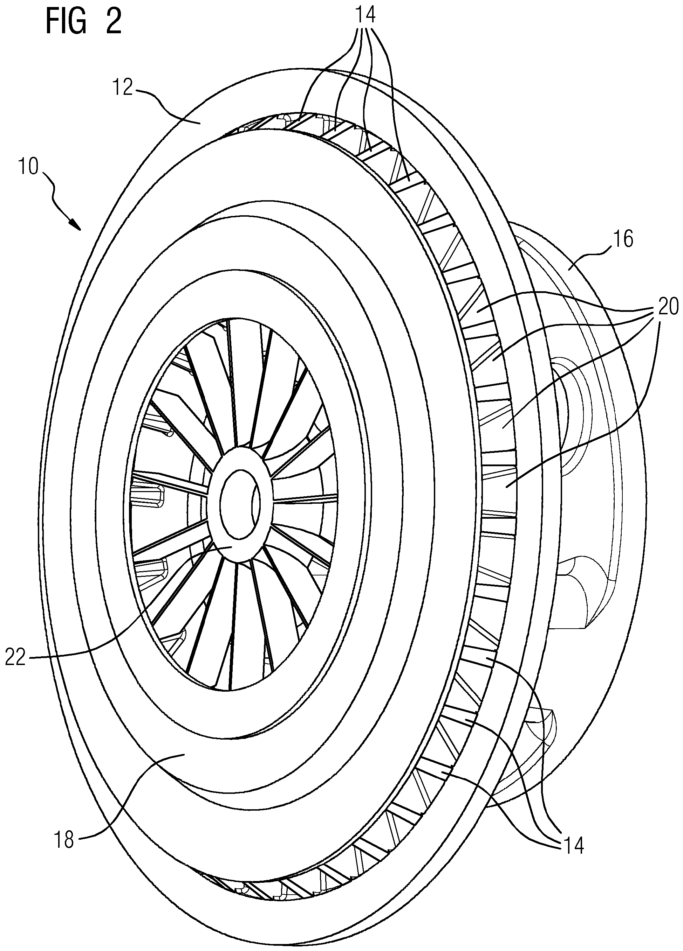

Die Darstellung in FIG 2 zeigt eine Ausführungsform des hier vorgeschlagenen Radnabengetriebes 10 auf der Basis des in FIG 1 gezeigten Teils des Radnabengetriebes 10. Im Gegensatz zu der Situation in FIG 1 weisen das vorgeschlagene Radnabengetriebe 10 und dessen Gehäuse an der Stirnseite 12 einen Deckel 18 mit einer zentralen Öffnung auf. Der Deckel 18 und die Kühlrippen 14 definieren eine Mehrzahl von Kühlkanälen 20. Im Betrieb und bei sich drehendem Radnabengetriebe 10 ergibt sich aufgrund der dann wirkenden Zentrifugalkraft eine Luftströmung durch die Kühlkanäle 20. Diese Luftströmung führt zu einer im Vergleich zur Kühlwirkung der bisherigen Ausführungsform nur mit Kühlrippen 14 besseren Entwärmung, denn aufgrund der Zentrifugalkraft ergibt sich ein im Wesentlichen kontinuierlicher Luftmassenstrom durch die Kühlkanäle 20, so dass die wärmeabgebenden Oberflächen gleichmäßig angeströmt werden.

Um zusätzliche Luft zur Kühlung des Radnabengetriebes 10 durch die Kühlkanäle 20 zu fördern, wird eine Antriebswelle (nicht gezeigt) des Radnabengetriebes 10 bis in den Bereich des Deckels 18 nach außen geführt und dort ein Radiallüfter 22, insbesondere ein drehrichtungsunabhängiger Radiallüfter 22, angebracht. Der Radiallüfter 22 steht über die zentrale Öffnung im Deckel 18 mit der Umgebungsluft in Verbindung, saugt Umgebungsluft an und drückt diese durch die Kühlkanäle 20. Der resultierende erhöhte Luftmassenstrom durch die Kühlkanäle 20 führt zu einer verbesserten Entwärmung des Radnabengetriebes 10. Die zum Antrieb des Radiallüfters 22 verlängerte Antriebswelle wird in dem verlängerten Abschnitt eventuell zusätzlich gelagert. Des Weiteren oder alternativ ist optional in dem verlängerten Abschnitt eine zusätzliche Dichtung vorgesehen.

Bei der in der Darstellung in FIG 2 gezeigten Ausführungsform des Radnabengetriebes 10 besteht noch die Besonderheit, dass nicht alle Kühlrippen 14 in radialer Richtung gleich lang sind. Erkennbar ist dies zum Beispiel anhand der Anzahl der am äußeren Rand des Deckels 18 erkennbaren Kühlrippenenden und der durch die zentrale Öffnung im Deckel 18 erkennbaren Kühlrippenenden. Bei der gezeigten Ausführungsform sind die langen und kurzen Kühlrippen 14 in einer alternierenden Abfolge angeordnet, derart, dass in Umfangsrichtung auf eine lange Kühlrippe 14 eine kurze Kühlrippe 14 und dann wieder eine lange Kühlrippe 14 folgt (durch die zentrale Öffnung im Deckel 18 sind nur die Enden der langen Kühlrippen 14 erkennbar). Diese alternierende Abfolge führt dazu, dass sich in radialer Richtung zwischen je zwei langen Kühlrippen 14 eine ausreichend große Öffnung für anströmende Luft ergibt. Eine durchgängige Verwendung langer Kühlrippen 14 würde zwar die Oberfläche der Kühlkanäle 20 vergrößern, aber aufgrund der geringen Öffnungsweite der Kühlkanäle 20 auf der angeströmten Seite den tatsächlich in die Kühlkanäle 20 eintretenden Luftmassenstrom stark begrenzen. Eine alternierende Abfolge von langen und kurzen Kühlrippen 14 ist ein günstiger Kompromiss zwischen der in die Kühlkanäle 20 einströmenden Luftmenge einerseits und der Innenoberfläche der Kühlkanäle 20 andererseits.

Die beschriebenen Ergänzungen, nämlich der Deckel 18, die mit dem Deckel 18 resultierenden Kühlkanäle 20 und der Radiallüfter 22, kommen zur Verwendung mit beliebigen Radnabengetrieben 10 in Betracht, sind also ausdrücklich nicht auf die dargestellte Ausführungsform des Radnabengetriebes 10 beschränkt.

Bei Tests und Simulationen der hier beschriebenen Ausführungsform des Radnabengetriebes 10 mit Kühlkanälen 20 und einem Radiallüfter 22 hat sich eine mehr als verdreifachte Wärmeabfuhr im Vergleich zu einer lediglich auf Konvektion basierenden Entwärmung (FIG 1) ergeben.

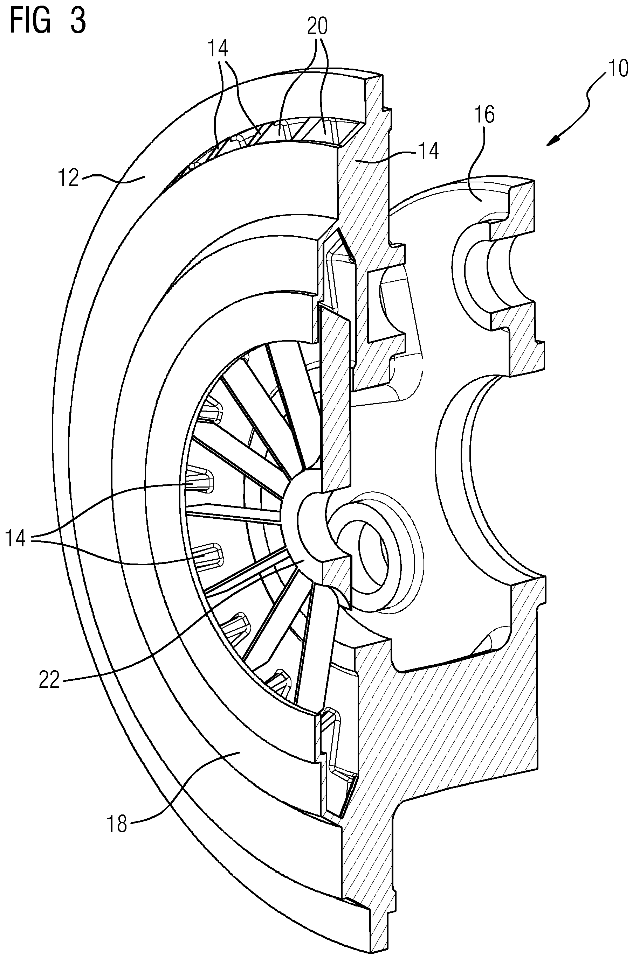

Die Darstellung in FIG 3 zeigt das Radnabengetriebe 10 gemäß FIG 2 in einer Schnittdarstellung. Erkennbar sind eine bei der gezeigten Ausführungsform konisch gestufte Struktur des Deckels 18, die Lüfterflügel des Radiallüfters 22 und die die Kühlkanäle 20 seitlich begrenzenden Kühlrippen 14. Die konisch gestufte Struktur des Deckels 18 definiert einen zentralen und zur Aufnahme des Radiallüfters 22 ausreichend großen Raum, dessen freie Höhe in radialer Richtung abnimmt, so dass vom Radiallüfter 22 angesaugte Umgebungsluft mit erhöhter Geschwindigkeit durch die Kühlkanäle 20 gepresst wird. Die erhöhte Geschwindigkeit und der resultierende erhöhte Luftmassenstrom führen zu einer guten Entwärmung der stirnseitigen Oberfläche 12 des Radnabengetriebes 10 und damit des Radnabengetriebes 10 insgesamt.

Obwohl die Erfindung im Detail durch das Ausführungsbeispiel näher illustriert und beschrieben wurde, so ist die Erfindung nicht durch das oder die offenbarten Beispiele eingeschränkt und andere Variationen können vom Fachmann hieraus abgeleitet werden, ohne den Schutzumfang der Erfindung zu verlassen.

Einzelne im Vordergrund stehende Aspekte der hier eingereichten Beschreibung lassen sich damit kurz wie folgt zusammenfassen: Angegeben wird ein Radnabengetriebe 10 mit einer als Stirnseite 12 fungierenden Außenfläche, wobei die Stirnseite 12 radial ausgerichtete und regelmäßig beabstandete Kühlrippen 14 aufweist, wobei sich das Radnabengetriebe 10 durch einen die stirnseitigen Kühlrippen 14 abdeckenden Deckel 18 mit einer zentralen Öffnung auszeichnet und wobei der Deckel 18 zusammen mit jeweils zwei benachbarten Kühlrippen 14 eine Mehrzahl von radial ausgerichteten Kühlkanälen 20 definiert, durch die im Betrieb durch die zentrale Öffnung angesaugte Luft strömt und eine Kühlung Entwärmung der Oberfläche des Radnabengetriebes 10 und damit des Radnabengetriebes 10 insgesamt bewirkt.

## Patentansprüche

1. Radnabengetriebe (10) mit einer als Stirnseite (12) fungierenden Außenfläche, wobei die Stirnseite (12) radial ausgerichtete und regelmäßig beabstandete Kühlrippen (14) aufweist,
umfassend einen die stirnseitigen Kühlrippen (14) abdeckenden Deckel (18) mit einer zentralen Öffnung, wobei der Deckel (18) zusammen mit jeweils zwei benachbarten Kühlrippen (14) eine Mehrzahl von radial ausgerichteten Kühlkanälen (20) definiert, **dadurch gekennzeichnet dass** das Radnabengetriebe (10) eine über die Stirnseite (12) hinaus verlängerte Antriebsachse aufweist, wobei an der verlängerten Antriebsachse ein die umgebenden Kühlkanäle (20) anströmender Radiallüfter (22) angebracht ist.

2. Radnabengetriebe (10) nach Anspruch 1
mit einem drehrichtungsunabhängigen Radiallüfter (22).

3. Radnabengetriebe (10) nach einem der vorangehenden Ansprüche,
wobei die Kühlrippen (14) in radialer Richtung unterschiedliche Längen aufweisen, so dass sich zumindest lange Kühlrippen (14) und in Relation zu den langen Kühlrippen (14) kurze Kühlrippen (14) ergeben, und wobei in regelmäßiger Abfolge in Umfangsrichtung auf eine lange Kühlrippe (14) eine Anzahl kurzer Kühlrippen (14) und dann erneut eine lange Kühlrippe (14) folgt.

4. Radnabengetriebe (10) nach Anspruch 3,
wobei in regelmäßiger Abfolge in Umfangsrichtung auf eine lange Kühlrippe (14) eine kurze Kühlrippe (14) und dann erneut eine lange Kühlrippe (14) folgt.

5. Radnabengetriebe (10) nach einem der vorangehenden Ansprüche mit einem konisch gestuften Deckel (18) mit einer zentralen Öffnung und einer vom Zentrum in Richtung auf die Kühlrippen (14) abnehmenden Höhe.

6. Kraftfahrzeug mit zumindest einem Radnabengetriebe (10) nach einem der vorangehenden Ansprüche.

## Claims

1. Wheel hub transmission (10) with an outer surface that acts as an end face (12), wherein the end face (12) has radially oriented cooling fins (14) at a regular distance from one another,
comprising a cover (18) which covers the cooling fins (14) at the end face and which has a central opening, wherein the cover (18), along with pairs of adjacent cooling fins (14), defines a plurality of radially oriented cooling ducts (20), **characterised in that** the wheel hub transmission (10) has a drive axle extended beyond the end face (12), wherein a radial fan (22) for air flowing into the surrounding cooling ducts (20) is attached to the extended drive axle.

2. Wheel hub transmission (10) according to claim 1,
with a radial fan (22) independent of the direction of rotation.

3. Wheel hub transmission (10) according to one of the preceding claims,
wherein the cooling fins (14) are of different lengths in a radial direction, resulting in at least long cooling fins (14) and, in relation to the long cooling fins (14), short cooling fins (14), and wherein a long cooling fin (14) is followed by a number of short cooling fins (14) and then a long cooling fin (14) again in a regular sequence in a peripheral direction.

4. Wheel hub transmission (10) according to claim 3, wherein a long cooling fin (14) is followed by a short cooling fin (14) and then a long cooling fin (14) again in a regular sequence in a peripheral direction.

5. Wheel hub transmission (10) according to one of the preceding claims with a conically stepped cover (18) with a central opening and decreasing in height from the centre in the direction of the cooling fins (14).

6. Vehicle with at least one wheel hub transmission (10) according to one of the preceding claims.

## Revendications

1. Engrenage (10) de moyeu de roue ayant une surface extérieure fonctionnant en côté (12) frontal, le côté (12) frontal ayant des ailettes (14) de refroidissement dirigées radialement et à intervalles réguliers,
comprenant un couvercle (18) recouvrant les ailettes (14) de refroidissement du côté frontal et ayant une ouverture centrale, le couvercle (18) définissant, ensemble avec respectivement deux ailettes (14) de refroidissement voisines, une pluralité de canaux (20) de refroidissement dirigés radialement, **caractérisé en ce que** l'engrenage (10) de moyeu de roue a un axe d'entraînement prolongé au-delà du côté (12) frontal, un ventilateur (12) radial alimentant les canaux (20) de refroidissement autour étant mis sur l'axe d'entraînement prolongé.

2. Engrenage (10) de moyeu de roue suivant la revendication 1, comprenant un ventilateur (22) radial indépendant du centre de rotation.

3. Engrenage (10) de moyeu de roue suivant l'une des revendications précédentes,
dans lequel les ailettes (14) de refroidissement ont des longueurs différentes dans la direction radiale, de manière à avoir au moins des ailettes (14) de refroidissement longues et, en relation aux ailettes (14) de refroidissement longues, des ailettes (14) de refroidissement courtes et dans lequel, suivant une succession régulière dans la direction périphérique, fait suite à une ailette (14) de refroidissement longue, un certain nombre d'ailettes (14) de refroidissement courtes, puis à nouveau une ailette (14) de refroidissement longue.

4. Engrenage (10) de moyeu de roue suivant la revendication 3, dans lequel, en succession régulière dans la direction périphérique, fait suite, à une ailette (14) de refroidissement longue, une ailette (14) de refroidissement courte, puis à nouveau une ailette (14) de refroidissement longue.

5. Engrenage (10) de moyeu de roue suivant l'une des revendications précédentes,
comprenant un couvercle (18) étagé de manière conique et ayant une ouverture centrale et une hauteur diminuant du centre en direction des ailettes (14) de refroidissement.

6. Véhicule automobile ayant au moins un engrenage (10) de moyeu de roue suivant l'une des revendications précédentes.
